# EUROPEAN PATENT SPECIFICATION

(11) **EP 4 391 872 B1**
(45) Date of publication and mention of the grant of the patent: **20.11.2024**
(21) Application number: 22793224.1
(22) Date of filing: 27.09.2022
(51) Int. Cl.: A47J 31/36, A47J 31/46, A47J 31/44

(54) **APPARATUS FOR MAKING A BEVERAGE BY INFUSION OF A FOOD SUBSTANCE**
VORRICHTUNG ZUR HERSTELLUNG EINES GETRÄNKS DURCH AUFGIESSEN EINER LEBENSMITTELSUBSTANZ
APPAREIL DE PRÉPARATION D'UNE BOISSON PAR INFUSION D'UNE SUBSTANCE ALIMENTAIRE

(30) Priority: 28.09.2021 IT 202100024806
(43) Date of publication of application: 03.07.2024
(73) Proprietor: Caffitaly System S.P.A., 40041 Gaggio Montano (BO) (IT)
(72) Inventor: PAOLETTI, Luciano, 50100 Firenze (IT); DIAMANTI, Maurizio, 40030 Castel di Casio (BO) (IT); CASTELLI, Cristiano, 40046 Alto Reno Terme (BO) (IT); TONELLI, Stefano, 40041 Gaggio Montano (BO) (IT)
(74) Representative: Ponchiroli, Simone
(86) International application number: PCT/IB2022/059169
(87) International publication number: WO 2023/052987

(56) References cited:
- EP-A1- 2 090 205
- EP-A2- 1 133 944
- WO-A2-2009/040856
- DE-A1- 102015 217 999
- US-A1- 2016 174 753

## Description

This invention relates in general to the beverage making sector and relates in particular to an apparatus for making a beverage by infusion of a food substance, for example roasted and ground coffee or a soluble substance.

In general, the apparatuses for which this invention is intended comprise an infusion unit which defines an infusion chamber which, in use, receives the food substance. In particular, the food substance is contained in a capsule. The infusion unit, in turn, comprises a first member and a second member, the first member being movable relative to the second member between a home position, in which the first member and the second member are spaced apart from each other and the infusion chamber is open, and an operating position, in which the first member and the second member are coupled to each other and the infusion chamber is closed and ready to proceed with infusion of the food substance contained in the infusion chamber itself.

To obtain a high quality beverage, in particular if the beverage to be made is coffee, it is preferable that infusion occurs by maintaining a high pressure inside the infusion chamber during infusion of the food substance. In fact, this pressure allows improved extraction of the substances contained in the food substance, thereby ensuring that the beverage dispensed both has improved flavour and preserves its organoleptic properties.

In general, beverage making apparatuses have already been proposed which comprise a back-pressure valve, which opens and allows the beverage to come out only when the pressure in the infusion chamber exceeds a predetermined value. Examples of such apparatuses are shown in European patent applications EP0264352A1, EP0726053A1, EP1133944A2, EP2090205A1 (which discloses the features of the preamble of independent claim 1), EP2190326A2 (corresponding to international patent application WO2009040856A2), and EP3349626A1 (corresponding to German patent application DE102015217999A1).

The inventors of this invention identified a disadvantage of the prior-art apparatuses provided with a back-pressure valve. In fact, deposits are formed in the back-pressure valve due to the presence of dirt and/or residues left by the beverage itself, such as particles of food substance or drops of beverage. These may dry out, substantially making the back-pressure valve obturator stick and lock up, and therefore the back-pressure valve risks not operating correctly or even not operating at all, that is to say, remaining locked in the closed position. This disadvantage is more likely if the apparatus is not used for a long period and/or when it is used to make beverages which tend to create sticky residues (for example sugary or milk-based beverages).

In this context the technical purpose which forms the basis of this invention is to provide an apparatus for making a beverage which allows the above-mentioned disadvantage to be overcome or which at least offers an alternative solution to the prior-art apparatuses. The technical purpose and the aims indicated are substantially achieved by an apparatus for making a beverage as defined in independent claim 1. Particular embodiments of this invention are defined in the corresponding dependent claims.

According to one aspect of this invention, the apparatus comprises a back-pressure valve, which is positioned on a dispensing duct and which, based on a pressure difference between the upstream side and the downstream side of the back-pressure valve, prevents or allows a flow of beverage towards a dispenser. The back-pressure valve mechanically operates in conjunction with the infusion unit by a moving mechanism, in such a way that, when the infusion chamber is open, the moving mechanism forces the back-pressure valve towards an open position (that is to say, towards the position in which the back-pressure valve allows the flow of beverage); when the infusion chamber is closed, the moving mechanism releases the back-pressure valve which can therefore operate normally.

That is useful because, just before the infusion chamber is loaded with the food substance and beverage making starts, the forced shifting of the valve to the open condition releases and separates the parts (specifically, the obturator and the sealing seat) which may have stuck and locked to each other due to dirt and beverage residues, thereby restoring the operating efficiency of the back-pressure valve. In other words, before each use of the apparatus the back-pressure valve is made to open by a mechanical device to ensure that it will also be able to open under the action of the predetermined pressure difference. It should be noticed that this maintenance action is fully automated and frequent, since it takes place each time the infusion chamber is opened, without needing any additional user intervention.

Moreover, since the moving mechanism forces the back-pressure valve to open even when the infusion chamber is opened to remove the food substance just after infusion, that is also useful for discharging any residual pressure in the dispensing duct and for eliminating, as far as possible, beverage residues in the back-pressure valve.

In one embodiment, the back-pressure valve is positioned at an end stretch of the dispensing duct, so that in the closed position the back-pressure valve closes one end of the dispensing duct. That end stretch extends vertically upwards. That is useful because any beverage residues in the dispensing duct are discharged backwards towards the infusion chamber, not towards the dispenser, and therefore beverage residues in the back-pressure valve are further reduced.

In a more specific embodiment, the dispenser comprises an inner chamber (for example, it is a tubular body); that end stretch of the dispensing duct is positioned in the inner chamber and opens upwards in a top region of the inner chamber. During dispensing, the back-pressure valve sprays the beverage radially against the inner wall of the chamber. That is useful in particular when the beverage is coffee, since it promotes the creation of a dense crema. A bottom region of the chamber has a dispensing opening, through which the beverage comes out.

In this description, the expression "mechanically operates in conjunction with" means that the elements involved have parts which physically interact with each other; in particular, two parts may interact with each other directly (for example, by making contact with each other) or indirectly (for example, by means of an interposed element which is moved by a part of one element and which moves a part of another element) creating mechanical constraints which cause or limit the movements of one element relative to the other.

The term "height" means a height relative to an ideal resting plane of the apparatus or relative to an element considered fixed which is part of the apparatus.

Further features and the advantages of this invention will be more apparent from the detailed description of some preferred, non-limiting embodiments of an apparatus for making a beverage, illustrated in the accompanying drawings in which:
- Figure 1 is an axonometric view of a first embodiment of an apparatus for making a beverage according to this invention, in an open position;
- Figure 2 is an axonometric view of the apparatus of Figure 1 in an intermediate position;
- Figure 3 is an axonometric view of the apparatus of Figure 1 in a closed position;
- Figure 4 is a top view of the apparatus of Figure 1 in the open position;
- Figure 5 is a view, according to a vertical cross section, of a portion of the apparatus of Figure 1 sectioned according to the section line V-V in Figure 4, in the open position;
- Figure 6 is a view, according to a vertical cross section, of a portion of the apparatus of Figure 1 sectioned according to the section line V-V, in the intermediate position;
- Figure 7 is a view, according to a vertical cross section, of a portion of the apparatus of Figure 1 sectioned according to the section line V-V, in the closed position;
- Figure 8 is an axonometric view of a second embodiment of an apparatus for making a beverage according to this invention, in an open position;
- Figure 9 is an axonometric view of the apparatus of Figure 8 in an intermediate position;
- Figure 10 is an axonometric view of the apparatus of Figure 8 in a closed position;
- Figure 11 is a top view of the apparatus of Figure 8 in the open position;
- Figure 12 is a view, according to a vertical cross section, of a portion of the apparatus of Figure 8, sectioned according to the section line XII-XII in Figure 11, in the open position;
- Figure 13 is a view, according to a vertical cross section, of a portion of the apparatus of Figure 8 sectioned according to the section line XII-XII, in the intermediate position; and
- Figure 14 is a view, according to a vertical cross section, of a portion of the apparatus of Figure 8 sectioned according to the section line XII-XII, in the closed position.

In the accompanying figures, the numeral 1 denotes in its entirety an apparatus for making a beverage according to this invention.

It should be emphasised that the accompanying figures and the following description refer to apparatuses commonly indicated as being of the "horizontal unit" type, that is to say, in which the movement of a first member of the infusion unit takes place along an axis which is substantially horizontal (or if necessary slightly oblique relative to the horizontal line). However, this invention may also be applied in different apparatuses, for example in apparatuses commonly indicated as being of the "vertical unit" type, that is to say, in which the movement of the first member takes place along an axis which is substantially vertical (or if necessary slightly oblique relative to the vertical line).

The apparatus 1 allows the beverage to be obtained by infusion of a food substance. In the embodiments illustrated, the apparatus 1 uses a capsule 9, in particular a disposable capsule 9, which contains a food substance, for example coffee powder or a soluble substance. It should be noticed that the term "capsule" here also means a pod, a cartridge or a similar object in which a casing contains a portion of food substance. In alternative embodiments the food substance is not contained in a capsule and may even be inserted directly into the infusion chamber of the apparatus 1.

First, the apparatus 1 comprises a supporting structure 11 configured to support the internal components of the apparatus 1. An outer casing intended to contain and protect the internal components of the apparatus 1 can be removably fixed to the supporting structure 11. The outer casing is not shown in the figures, in order to further highlight the internal components.

The apparatus 1 also comprises an infusion unit 2, which defines an infusion chamber 23 intended to receive the food substance. In particular, the infusion chamber 23 is configured to receive the capsule 9.

In turn, the infusion unit 2 comprises a first member 21 and a second member 22, the first member 21 being movable relative to the second member 22.

In the embodiments shown in the figures, the first member 21 is movable relative both to the supporting structure 11 and to the second member 22, whilst the second member 22 is fixed and stationary relative to the supporting structure 11; in other possible embodiments, the first member 21 and the second member 22 are both movable relative to the supporting structure 11.

In any case, the first member 21 of the infusion unit 2 is movable relative to the second member 22 between a home position and an operating position.

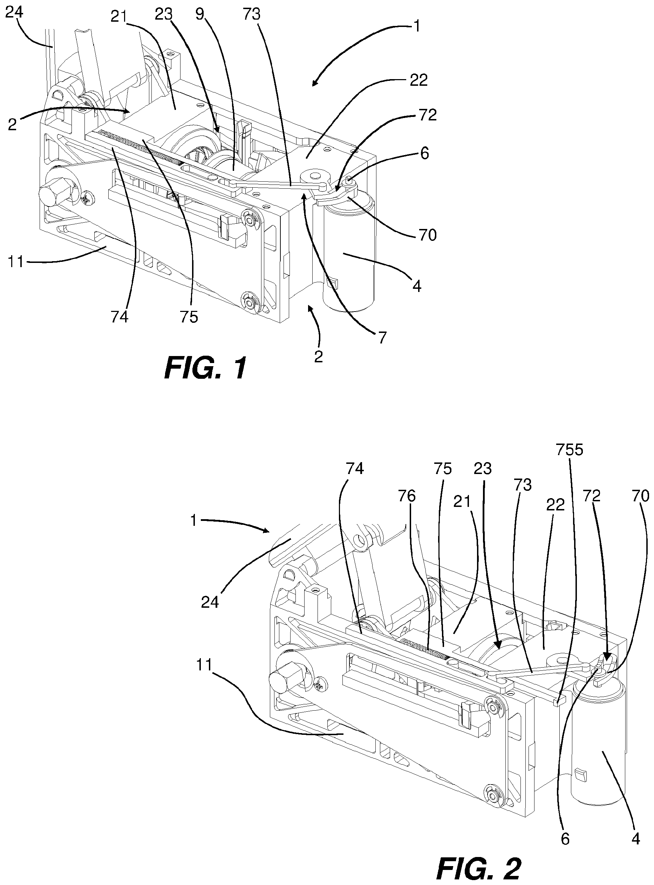

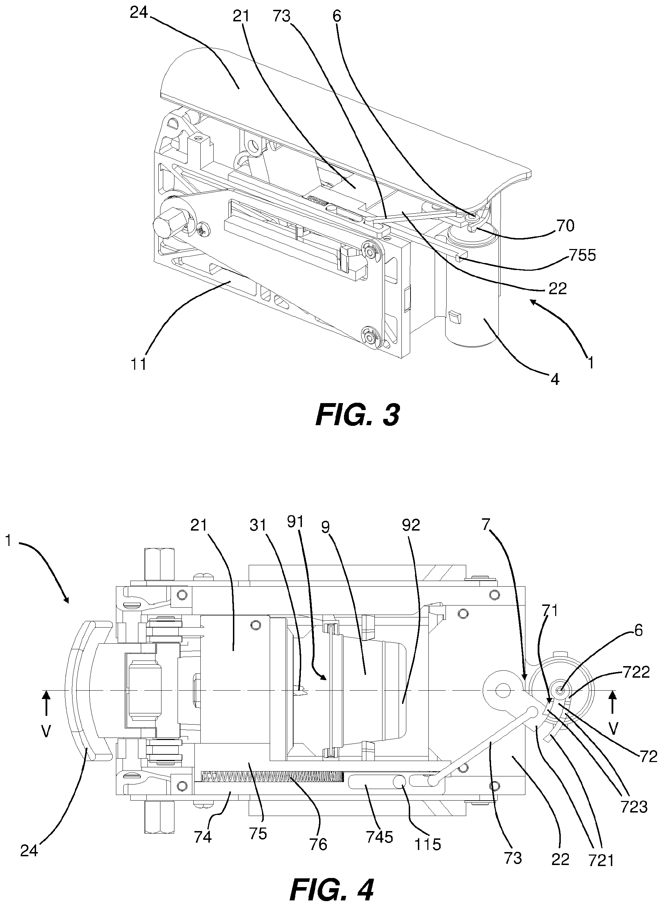

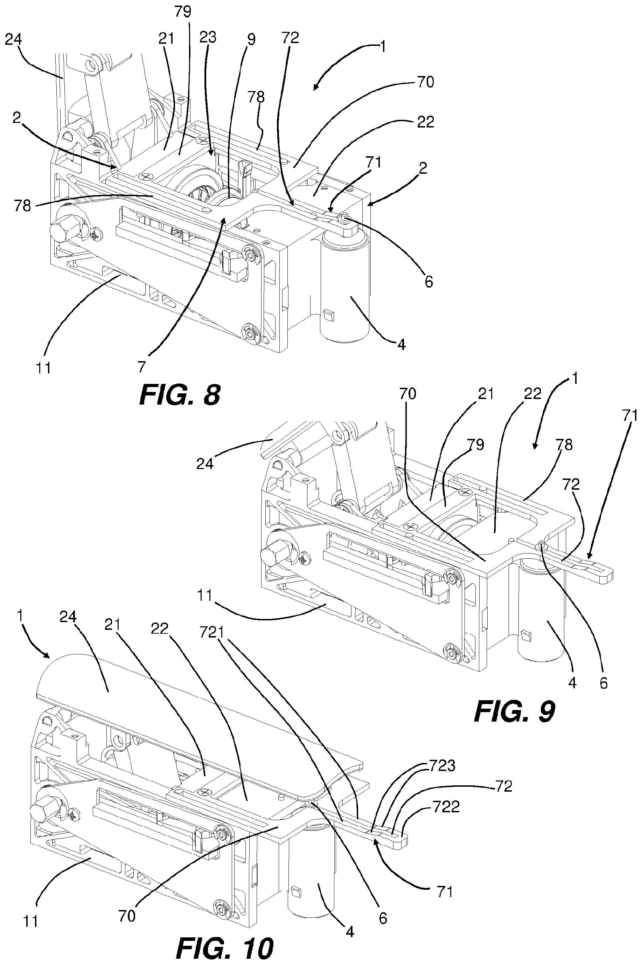

When the first member 21 is in the home position - shown in Figures 1 and 8 - the first member 21 and the second member 22 are spaced apart from each other and the infusion chamber 23 is open and allows insertion of the food substance (in particular, of the capsule 9) into the infusion chamber 23 or removal of the food substance (or of the capsule 9) from the infusion chamber 23. In contrast, when the first member 21 is in the operating position - shown in Figures 3 and 10 - the first member 21 and the second member 22 are coupled to each other and the infusion chamber 23 is closed. In the operating position during use of the apparatus 1, the infusion unit 2 contains the food substance (or the capsule 9) in the infusion chamber 23. Hereinafter reference will be made to an apparatus 1 which uses capsules 9, however it shall be understood that the same principles are also applicable to apparatuses which do not use capsules. Basically, when the first member 21 is in the home position, the infusion chamber 23 is open and beverage making has not yet started (in this case the capsule 9 must be inserted / has just been inserted into the open infusion chamber 23) or has ended (in this case the already used capsule 9 must be removed from the open infusion chamber 23); when the first member 21 is in the operating position and the capsule 9 is inside the infusion chamber 23, the infusion chamber 23 is closed and the apparatus 1 can make the beverage. Between the home position (Figures 1 and 8) and the operating position (Figures 3 and 10) an intermediate position shown in Figures 2 and 9 is present.

As concerns the movement of the first member 21 (and of the second member 22 if movement of the latter is provided), in the apparatuses 1 illustrated herein it is manually driven by a user by means of a lever 24 or a handle (only partly shown in some figures), whilst in alternative embodiments it is motor-driven and automated if necessary.

In the embodiments illustrated, a housing 221 configured to house the capsule 9 is made in the second member 22. When the infusion chamber 23 is closed, the first member 21 and the second member 22 are coupled to each other in such a way that the first member 21 closes the housing 221 made in the second member 22. In the embodiments illustrated the housing 221 is made almost entirely in the second member 22; however, in other embodiments the housing 221 may be made in the first member 21 or partly in the first member 21 and in the second member 22.

The apparatus 1 also comprises piercing means which are configured to create openings in the capsule 9 to allow the injection of a liquid substance (for example, hot, pressurised water) into the capsule 9 and to allow the beverage to come out of the capsule 9. In particular, the piercing means comprises a first piercer 31, associated with the first member 21 of the infusion unit 2, which is configured to pierce a top wall 91 of the capsule 9 creating a first opening for injecting the liquid substance into the capsule 9, and a second piercer 32, associated with the second member 22, which is configured to pierce a bottom wall 92 of the capsule 9 creating a second opening from which the beverage to be dispensed comes out.

The apparatus 1 also comprises beverage making parts, which are configured to feed, in use, the liquid substance into the infusion chamber 23 (through the capsule 9), in such a way as to cause the beverage to be made as a result of the interaction between the liquid substance and the food substance. Specifically, the beverage making parts comprise for example: a water tank; a pump; a heater; feeding pipes for feeding the hot water to the infusion chamber 23 (and to the capsule 9 through the first opening).

The apparatus 1 comprises a dispenser 4 to dispense the beverage. A dispensing duct 5 connects the infusion chamber 23 (in particular, the zone of the second piercer 32) to the dispenser 4. The beverage which comes out of the second opening in the capsule 9 follows a dispensing path - which comprises the dispensing duct 5 - from the infusion chamber 23 until it comes out of the apparatus 1 at the dispenser 4.

In the embodiments illustrated in the figures, the dispensing duct 5 is L-shaped. In particular, a first stretch 51 of the dispensing duct 5 is positioned substantially horizontal and the second piercer 32 is fitted inside it; in contrast, a second stretch 52 of the dispensing duct 5 is positioned substantially vertical. As shown in the figures, the first stretch 51 and the second stretch 52 form a right angle between them. The second stretch 52 is an end stretch of the dispensing duct 5 and opens upwards.

In the embodiments illustrated, the dispenser 4 comprises an inner chamber 40 and has a dispensing opening 45 in a bottom region of the inner chamber 40. Basically, the dispenser 4 is a tubular body. The end stretch 52 of the dispensing duct 5 is in the inner chamber 40 and opens upwards in a top region of the inner chamber 40. Specifically, the end stretch 52 is coaxial with a central axis of the tubular body of the dispenser 4. It should also be noticed that the dispenser 4 is adjacent to the second member 22 from which the beverage comes out, therefore the dispensing duct 5 is short.

The apparatus 1 according to this invention comprises a back-pressure valve 6 which is positioned on the dispensing duct 5. Based on a pressure difference between an upstream side and a downstream side of the back-pressure valve 6, the valve prevents or allows a flow of beverage towards the dispenser 4. Specifically, the upstream side is the end stretch 52 and the downstream side is the inner chamber 40. In static conditions in which there is no beverage flow, the pressure in the upstream side is the pressure in the infusion chamber 23 and the pressure in the downstream side is the ambient pressure. The back-pressure valve 6 is calibrated to allow the beverage flow when the pressure difference is greater than a threshold value.

Therefore, the back-pressure valve 6 is useful for carrying out the infusion in the infusion chamber 23 at a pressure value which was considered optimum at the design stage of the apparatus 1. The pressure threshold value is also selected depending on the specific user requirements and if necessary the back-pressure valve 6 may be adjustable for setting the selected threshold value. For example, the threshold value is within the 1 bar to 4 bar range, in particular 3 bar.

The back-pressure valve 6 comprises a sealing seat 622 which surrounds a passage for the beverage, an obturator 62 which is movable relative to the sealing seat 622 between a closed position and an open position, an elastic member 63 which pushes the obturator 62 towards the closed position. In the closed position the obturator 62 is in contact with the sealing seat 622 thereby closing the passage for the beverage: the back-pressure valve 6 is closed. In the open position the obturator 62 is spaced apart from the sealing seat 622 thereby leaving the passage for the beverage open: the back-pressure valve 6 is open. The pressure difference value at which the back-pressure valve 6 opens depends on the force of the elastic member 63 (that is to say, on the elastic constant of the elastic member 63).

The passage for the beverage is a passage in the dispensing duct 5 and in particular is an end of the dispensing duct 5. In the embodiments illustrated, the sealing seat 622 is at an end of the end stretch 52 of the dispensing duct 5, so that when the obturator 62 is in the closed position the back-pressure valve 6 closes an end of the dispensing duct 5. It should be noticed that, in the figures, the back-pressure valve 6 is positioned in the inner chamber 40 of the dispenser 4.

In other possible embodiments, the sealing seat 622 is in other portions of the dispensing duct 5, which are different from the end of the end stretch 52.

The infusion unit 2 mechanically operates in conjunction with the back-pressure valve 6 by a moving mechanism 7, in such a way that during the movement of the first member 21 from the operating position to the home position the moving mechanism 7 shifts the obturator 62 from the closed position to the open position and that during the movement of the first member 21 from the home position to the operating position the moving mechanism 7 releases the obturator 62 and allows a return of the obturator 62 to the closed position (thanks to the elastic member 63).

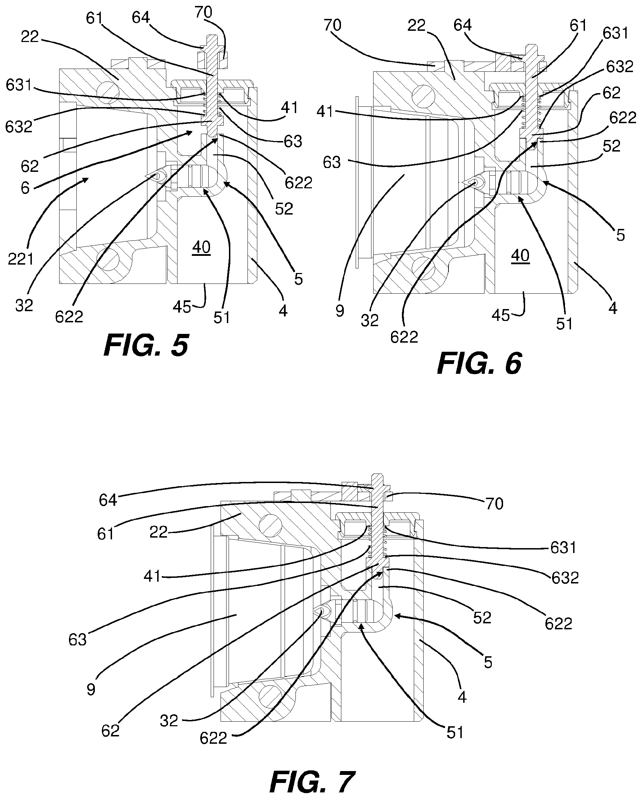

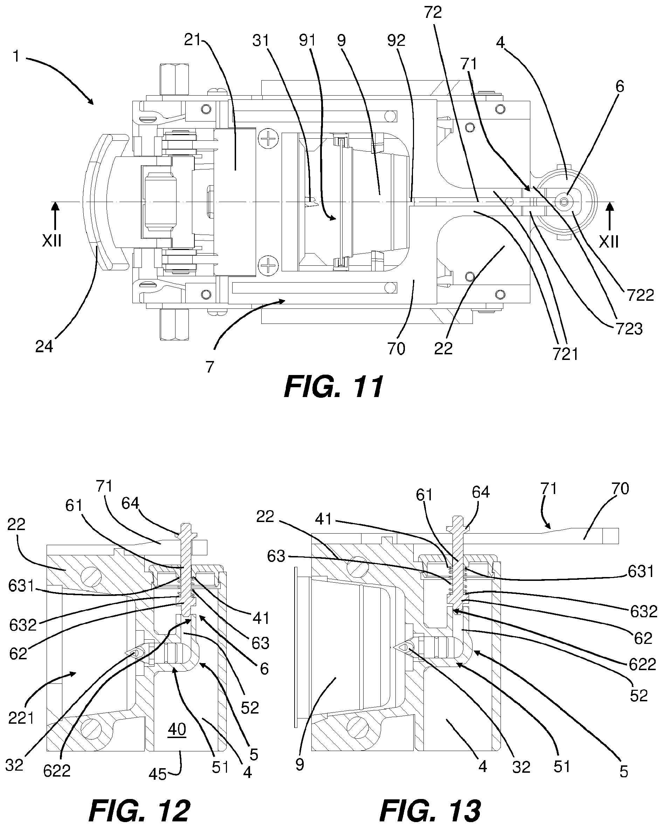

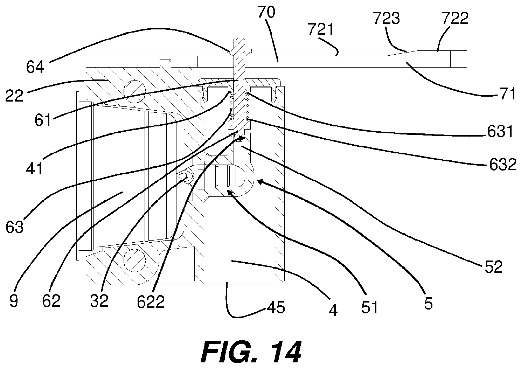

In particular, when the first member 21 is in the operating position the obturator 62 is in the closed position (Figures 7 and 14) except for its shifting to the open position when the above-mentioned pressure difference is reached, whilst when the first member 21 is in the home position the obturator 62 is in the open position (Figures 5 and 12).

In the embodiments shown in the figures, the back-pressure valve 6 comprises a stem 61 which is connected to the obturator 62 and is movable with the obturator 62: the stem 61 is movable between a first position, in which the obturator 62 is in the closed position, and a second position, in which the obturator 62 is in the open position. Basically, the position of the obturator 62 is controllable through the stem 61.

In particular, the stem 61 extends substantially coaxial with the end stretch 52. In the embodiments illustrated, the movement of the stem 61 between the first position and the second position, and vice versa, is a translating movement along a longitudinal axis of the stem 61.

As concerns the elastic member 63, it is configured to close the back-pressure valve 6 and to hold it closed until the force of the elastic member 63 is overcome by a greater force. That greater force is applied by the pressurised beverage - beyond the threshold value - in the end stretch 52 of the dispensing duct 5 during beverage making, or is applied by the moving mechanism 7 during opening of the infusion unit 2. In particular, the elastic member 63 is a compression spring which becomes more compressed during the movement of the obturator 62 from the closed position to the open position.

That compression spring has a first end 631 and a second end 632. The first end 631 abuts against a first contact element 41, for example it abuts against a wall of the dispenser 4, whilst the second end 632 abuts against the obturator 62: in this way the compression spring pushes the obturator 62, thereby holding it in contact with the sealing seat 622 when the back-pressure valve 6 is closed.

The moving mechanism 7 acts on the stem 61 to shift the stem 61 from the first position to the second position during the movement of the first member 21 from the operating position to the home position, in that way shifting the obturator 62 from the closed position to the open position.

In the embodiments illustrated, the moving mechanism 7 is moved by the infusion unit 2 and in turn moves the obturator 62. In particular, the first member 21 of the infusion unit 2 causes the movement of the moving mechanism 7.

In the embodiments illustrated, the moving mechanism 7 comprises an actuating member 70 which acts on the stem 61 and is movable between a disengaged position and an engaged position, and vice versa. During the movement from the disengaged position towards the engaged position, the actuating member 70 applies a force on the stem 61 which shifts the stem 61 from the first position to the second position, so that in the engaged position the stem 61 is in the second position and the obturator 62 is in the open position. In contrast, when the actuating member 70 is in the disengaged position, the actuating member 70 does not interfere with the movements of the stem 61 and of the obturator 62 between the respective positions and therefore the back-pressure valve 6 can operate as expected based on the pressure difference between the upstream side and the downstream side.

Specifically, when the first member 21 is in the operating position the actuating member 70 is in the disengaged position (as shown in Figures 3 and 10) and when the first member 21 is in the home position (as shown in Figures 1 and 8) the actuating member 70 is in the engaged position. However, it should be noticed that the actuating member 70 could be in the engaged position only at an intermediate position of the first member 21 between the operating position and the home position. In fact, one aim of this invention is for the back-pressure valve 6 and its obturator 62 to be forced towards the open position before beverage making starts, that is to say, before the infusion chamber 23 closes.

Depending on the embodiment, the actuating member 70 rotates, translates, or rotates and translates between the disengaged position and the engaged position, and vice versa.

The embodiments shown in the figures differ from each other in the different shape or structure of the moving mechanism 7.

In the apparatus 1 shown in Figures 1 to 7 the movement of the actuating member 70 between the disengaged position and the engaged position, and vice versa, is a rotation around an axis of rotation. Specifically, the actuating member 70 pivots at the second member 22 of the infusion unit 2.

The moving mechanism 7 also comprises a translating element 74, which is capable of translating along an axis of translation which is parallel to the line of movement of the first member 21 between the operating position and the home position, and a connecting arm 73 between the translating element 74 and the actuating member 70. The connecting arm 73 pivots at the translating element 74 and at the actuating member 70; thanks to it, the translation of the translating element 74 is converted into rotation of the actuating member 70.

In the particular embodiment illustrated, the translating element 74 is slidably mounted on the supporting structure 11 and moreover the moving mechanism 7 comprises a pusher element 75, also translating, which is fixed to the first member 21 and moves with it. A compression spring 76 is interposed between the translating element 74 and the pusher element 75.

During the movement of the first member 21 from the operating position to the home position, the pusher element 75 translates relative to the translating element 74 until a tooth 755 of the pusher element 75 makes contact with the translating element 74; from there on, the pusher element 75 and the translating element 74 translate together and the actuating member 70 is shifted towards the engaged position by the connecting arm 73 which is dragged by the translating element 74.

During the movement of the first member 21 from the home position to the operating position, the pusher element 75 pushes the translating element 74 by means of the compression spring 76 and the actuating member 70 is shifted towards the disengaged position by the connecting arm 73, until the translating element 74 reaches its end of stroke (defined by a tooth or a projecting element 115 fixed to the supporting structure 11 and received in a slot 745 of the translating element 74); from there on, the pusher element 75 translates relative to the translating element 74 and the compression spring 76 is compressed.

It should be noticed that this configuration is useful to ensure that the stroke of the translating element 74 is less than the stroke of the first member 21 and is better suited to the needs of the actuating member 70. However, in alternative embodiments, the pusher element 75 may not be present and the translating element 74 may be fixed directly to the first member 21.

In the apparatus 1 shown in Figures 8 to 14 the movement of the actuating member 70 between the disengaged position and the engaged position, and vice versa, is a translation along an axis of translation which is parallel to the line of movement of the first member 21 between the operating position and the home position. In particular, the actuating member 70 is fixed to the first member 21 and is movable with the first member 21. As can be seen in the figures, the actuating member 70 has two arms 78, which slide on opposite sides of the supporting structure 11, and a connecting part 79 which is fixed directly to the first member 21 and which connects the arms 78 to each other.

As concerns the interaction between the stem 61 and the actuating member 70, in the embodiments illustrated the movement of the stem 61 between the first position and the second position, and vice versa, is a translating movement along a longitudinal axis of the stem 61 (specifically, that longitudinal axis is vertical), whilst the movement of the actuating member 70 between the disengaged position and the engaged position, and vice versa, is on a plane which is transversal or perpendicular to the longitudinal axis of the stem 61 (specifically, that plane is horizontal). The actuating member 70 comprises a wedge-shaped portion 71 having a thrust surface which is inclined relative to the movement plane of the actuating member 70; during the movement between the disengaged position and the engaged position, the wedge-shaped portion 71 interacts - by means of the thrust surface - with a respective contact element 64 of the stem 61 to push the stem 61 longitudinally towards the second position.

In particular, the actuating member 70 has a through channel 72 which houses a stretch of the stem 61. The stem 61 is slidable relative to the through channel 72 both axially (when the stem 61 moves between the first position and the second position) and along the through channel 72 itself (when the actuating member 70 moves on the movement plane).

In other words, the interaction between the actuating member 70 and the stem 61 occurs substantially as a wedge-like or inclined-plane-like interaction. The movement of the stem 61 from the first position to the second position - and therefore the movement of the obturator 62 from the closed position to the open position, is caused by a sliding of the thrust surface relative to the contact element 64, that sliding in turn being due to the movement of the actuating member 70 between the disengaged position and the engaged position. In particular, since the thrust surface is inclined, this sliding causes a variation in the height of the contact element 64 and therefore the movement of the stem 61 along its longitudinal axis (vertical).

In more detail, the contact element 64 is positioned on the stem 61, at the opposite side to the obturator 62, and is shaped like an annular portion which projects radially relative to the stem 61, so as to rest on a resting surface of the actuating member 70.

The resting surface of the actuating member 70 is shaped in such a way that it has two flat zones 721, 722, which are parallel to the movement plane of the actuating member 70 and are located at respective ends of the through channel 72, and an inclined zone 723, which is said thrust surface and is located between the two flat zones 721, 722. The two flat zones 721, 722 are positioned at different heights, with the first flat zone 721 positioned at a lower height than the second flat zone 722. When the obturator 62 is in the closed position and the actuating member 70 is in the disengaged position, the contact element 64 abuts against the first flat zone 721 (as shown in Figures 7 and 14); when the obturator 62 is in the open position and the actuating member 70 is in the engaged position, the contact element 64 abuts against the second flat zone 722 (as shown in Figures 5 and 12). During the movement of the actuating member 70 between the disengaged position and the engaged position, the contact element 64 abuts against the inclined zone 723, which acts as a wedge and axially shifts the stem 61. The abutting in the different zones is held thanks to the force applied by the elastic member 63.

In short, an operating cycle of the apparatus 1 according to the first embodiment shown in Figures 1 to 7 is as follows:
- the first member 21 is in the home position and a capsule 9 has been inserted into the open infusion chamber 23; the actuating member 70 is in the engaged position and the contact element 64 is at the second flat zone 722, the elastic member 63 is compressed and the obturator 62 is in the open position (Figures 1, 4 and 5);
- the first member 21 is moved from the home position towards the operating position by the user using the lever 24; the movement of the first member 21 causes, by means of the mechanism described above, movement of the connecting arm 73, which makes the actuating member 70 rotate from the engaged position towards the disengaged position; in turn, the movement of the actuating member 70 causes the contact element 64 to move from the second flat zone 722 to the inclined zone 723; the obturator 62 returns towards the closed position thanks to the elastic member 63 (Figures 2 and 6);
- when the first member 21 reaches the operating position, the infusion chamber 23 is closed with the capsule 9 inside it; the actuating member 70 is in the disengaged position, with the contact element 64 abutting against the first flat zone 721 (that is to say, the flat zone at the lower height): the obturator 62 is in the closed position (Figures 3 and 7);
- beverage making is started: the pressurised liquid substance is injected into the capsule 9 and infusion of the food substance takes place; the dispensing duct 5 upstream of the back-pressure valve 6 fills with beverage and is at the same pressure as the infusion chamber 23; the back-pressure valve 6 remains closed until the pressure difference is such that it overcomes the elastic member 63, thereby shifting the obturator 62 to the open position and allowing the beverage to pass towards the dispenser 4; the beverage is sprayed radially against the lateral wall of the inner chamber 40 of the dispenser 4, falls towards the bottom and comes out through the dispensing opening 45;
- when beverage dispensing has ended, the user uses the lever 24 to open the infusion unit 2: the first member 21 is moved from the operating position to the home position, the capsule 9 is unloaded from the infusion chamber 23, the connecting arm 73 makes the actuating member 70 rotate in the opposite direction to that described above; the movement of the actuating member 70 causes the contact element 64 to move from the first flat zone 721 to the second flat zone 722 passing along the inclined zone 723, therefore the obturator 62 is returned to the open position (Figures 1, 4 and 5).

It should be noticed that, when the apparatus 1 is not used, it is preferable for the infusion unit 2 to be closed, as in Figures 3 and 7. Therefore, before inserting the capsule 9 the user must bring the infusion unit 2 to the home position and therefore the obturator 62 is also brought into the open position just before the beverage is made.

The operating cycle of the apparatus 1 according to the second embodiment, shown in Figures 8 to 14, differs from what was described for the first embodiment only in that the actuating member 70 translates, instead of rotating, and in that it translates together with the first member 21, to which the actuating member 70 is for example screwed.

## Claims

1. An apparatus (1) for making a beverage by infusion of a food substance, the apparatus (1) comprising:
- an infusion unit (2) which defines an infusion chamber (23) intended to receive the food substance, the infusion unit (2) comprising a first member (21) and a second member (22), the first member (21) being movable relative to the second member (22) between a home position, in which the first member (21) and the second member (22) are spaced apart from each other and the infusion chamber (23) is open and allows insertion of the food substance into the infusion chamber (23) or removal of the food substance from the infusion chamber (23), and an operating position, in which the first member (21) and the second member (22) are coupled to each other and the infusion chamber (23) is closed;
- beverage making parts, which are configured to feed, in use, a liquid substance into the infusion chamber (23), thereby causing the beverage to be made as a result of the interaction between the liquid substance and the food substance;
- a dispenser (4) to dispense the beverage, a dispensing duct (5) connecting the infusion chamber (23) to the dispenser (4); and
- a back-pressure valve (6) which is positioned on the dispensing duct (5) and which, based on a pressure difference between an upstream side and a downstream side of the back-pressure valve (6), prevents or allows a flow of beverage towards the dispenser (4),
the back-pressure valve (6) comprising a sealing seat (622) which surrounds a passage for the beverage, an obturator (62) which is movable relative to the sealing seat (622) between a closed position and an open position, an elastic member (63) which pushes the obturator (62) towards the closed position, wherein in the closed position the obturator (62) is in contact with the sealing seat (622) thereby closing the passage for the beverage and in the open position the obturator (62) is spaced apart from the sealing seat (622) thereby leaving the passage for the beverage open,
**characterised in that** the infusion unit (2) mechanically operates in conjunction with the back-pressure valve (6) by a moving mechanism (7), in such a way that during the movement of the first member (21) from the operating position to the home position the moving mechanism (7) shifts the obturator (62) from the closed position to the open position and that during the movement of the first member (21) from the home position to the operating position the moving mechanism (7) releases the obturator (62) and allows a return of the obturator (62) to the closed position.

2. The apparatus (1) according to claim 1, wherein the back-pressure valve (6) comprises a stem (61) which is connected to the obturator (62) and is movable with the obturator (62), the stem (61) being movable between a first position, in which the obturator (62) is in the closed position, and a second position, in which the obturator (62) is in the open position,
the moving mechanism (7) acting on the stem (61) to shift the stem (61) from the first position to the second position during the movement of the first member (21) from the operating position to the home position.

3. The apparatus (1) according to claim 2, wherein the moving mechanism (7) comprises an actuating member (70) which acts on the stem (61) and is movable between a disengaged position and an engaged position, and vice versa, wherein the actuating member (70) during the movement from the disengaged position towards the engaged position applies a force on the stem (61) which shifts the stem (61) from the first position to the second position, so that in the engaged position the stem (61) is in the second position and the obturator (62) is in the open position, the actuating member (70) in the disengaged position not interfering with the movements of the stem (61) and of the obturator (62) between the respective positions.

4. The apparatus (1) according to claim 3, wherein the movement of the actuating member (70) between the disengaged position and the engaged position, and vice versa, is a rotation around an axis of rotation.

5. The apparatus (1) according to claim 4, wherein the moving mechanism (7) comprises a translating element (74), which is capable of translating along an axis of translation which is parallel to the line of movement of the first member (21) between the operating position and the home position, and a connecting arm (73) between the translating element (74) and the actuating member (70), the connecting arm (73) pivoting at the translating element (74) and at the actuating member (70), so that a translation of the translating element (74) is converted into a rotation of the actuating member (70).

6. The apparatus (1) according to claim 3, wherein the movement of the actuating member (70) between the disengaged position and the engaged position, and vice versa, is a translation along an axis of translation which is parallel to the line of movement of the first member (21) between the operating position and the home position.

7. The apparatus (1) according to claim 6, wherein the actuating member (70) is fixed to the first member (21) and is movable with the first member (21).

8. The apparatus (1) according to any one of claims 3 to 7, wherein the movement of the stem (61) between the first position and the second position, and vice versa, is a translating movement along a longitudinal axis of the stem (61), wherein the movement of the actuating member (70) between the disengaged position and the engaged position, and vice versa, is on a plane which is transversal or perpendicular to the longitudinal axis of the stem (61), wherein the actuating member (70) comprises a wedge-shaped portion (71) which has a thrust surface inclined relative to the movement plane of the actuating member (70) and which, during the movement between the disengaged position and the engaged position, interacts with a respective contact element (64) of the stem (61) to push the stem (61) longitudinally towards the second position.

9. The apparatus (1) according to claim 8, wherein the actuating member (70) has a through channel (72) which houses a stretch of the stem (61).

10. The apparatus (1) according to any one of claims 1 to 9, wherein the sealing seat (622) is at one end of an end stretch (52) of the dispensing duct (5), so that when the obturator (62) is in the closed position the back-pressure valve (6) closes one end of the dispensing duct (5).

11. The apparatus (1) according to claim 10, wherein the dispenser (4) comprises an inner chamber (40) and has a dispensing opening (45) in a bottom region of the inner chamber (40), the end stretch (52) of the dispensing duct (5) being in the inner chamber (40) and opening upwards in a top region of the inner chamber (40).

12. The apparatus (1) according to any one of claims 1 to 11, wherein the infusion chamber (23) is configured to receive a capsule (9) which contains the food substance, the infusion unit (2) with the first member (21) in the home position allowing insertion of the capsule (9) into the infusion chamber (23) or removal of the capsule (9) from the infusion chamber (23), the infusion unit (2) with the first member (21) in the operating position containing, in use, the capsule (9) in the infusion chamber (23), and the beverage making parts being configured to feed the liquid substance through the capsule (9).

## Patentansprüche

1. Eine Vorrichtung (1) zur Zubereitung eines Getränks durch den Aufguss einer Lebensmittelsubstanz, die Vorrichtung (1) beinhaltet dabei Folgendes:
- eine Aufgusseinheit (2), die eine Aufgusskammer (23) definiert, die dazu dient, die Lebensmittelsubstanz entgegenzunehmen, die Aufgusseinheit (2) beinhaltet dabei ein erstes Bauteil (21) und ein zweites Bauteil (22), das erste Bauteil (21) ist dabei im Verhältnis zum zweiten Bauteil (22) zwischen einer Grundstellung, in der das erste Bauteil (21) und das zweite Bauteil (22) in einem Abstand voneinander sind und die Aufgusskammer (23) offen ist und das Einfügen der Lebensmittelsubstanz in die Aufgusskammer (23) oder das Entfernen der Lebensmittelsubstanz aus der Aufgusskammer (23) erlaubt, und einer Betriebsstellung, in der das erste Bauteil (21) und das zweite Bauteil (22) miteinander verbunden sind und die Aufgusskammer (23) geschlossen ist, beweglich;
- Getränkezubereitungsteile, die beschaffen sind, um im Gebrauch einen flüssigen Stoff in die Aufgusskammer (23) einzuführen, dadurch die Zubereitung des Getränks als Ergebnis der Interaktion zwischen dem flüssigen Stoff und der Lebensmittelsubstanz verursachend;
- einen Spender (4), um das Getränk auszugeben, einen Ausgabekanal (5), der die Aufgusskammer (23) mit dem Spender (4) verbindet; und
- ein Absperrventil (6), das am Ausgabekanal (5) platziert ist und das aufgrund eines Druckunterschieds zwischen einer davor liegenden Seite und einer dahinter liegenden Seite des Absperrventils (6) einen Getränkefluss zum Spender (4) verhindert oder erlaubt,
das Absperrventil (6) beinhaltet dabei einen Dichtungssitz (622), der einen Durchlauf für das Getränk umringt, einen Schieber (62), der im Verhältnis zum Dichtungssitz (622) zwischen einer geschlossenen Stellung und einer geöffneten Stellung beweglich ist, ein elastisches Element (63), das den Schieber (62) in die geschlossene Stellung schiebt, wobei der Schieber (62) in der geschlossenen Stellung mit dem Dichtungssitz (622) in Berührung steht und dadurch den Durchlauf für das Getränk schließt und der Schieber (62) in der geöffneten Stellung in einem Abstand vom Dichtungssitz (622) ist und dadurch den Durchlauf für das Getränk offen lässt,
**gekennzeichnet dadurch, dass** die Aufgusseinheit (2) durch einen Bewegungsmechanismus (7) mechanisch zusammen mit dem Absperrventil (6) funktioniert, solcherart, dass während der Bewegung des ersten Bauteils (21) von der Betriebsstellung in die Grundstellung der Bewegungsmechanismus (7) den Schieber (62) von der geschlossenen Stellung in die geöffnete Stellung schiebt und dass während der Bewegung des ersten Bauteils (21) von der Grundstellung in die Betriebsstellung der Bewegungsmechanismus (7) den Schieber (62) freigibt und eine Rückkehr des Schiebers (62) in die geschlossene Stellung erlaubt.

2. Die Vorrichtung (1) nach dem Patentanspruch 1, wobei das Absperrventil (6) einen Schaft (61) beinhaltet, der mit dem Schieber (62) verbunden ist und mit dem Schieber (62) beweglich ist, der Schaft (61) ist dabei zwischen einer ersten Stellung, in der der Schieber (62) in der geschlossenen Stellung ist, und einer zweiten Stellung, in der der Schieber (62) in der geöffneten Stellung ist, beweglich,
der Bewegungsmechanismus (7) wirkt dabei auf den Schaft (61) ein, um den Schaft (61) von der ersten Stellung in die zweite Stellung zu schieben, während der Bewegung des ersten Bauteils (21) von der Betriebsstellung in die Grundstellung.

3. Die Vorrichtung (1) nach dem Patentanspruch 2, wobei der Bewegungsmechanismus (7) ein Betätigungselement (70) beinhaltet, das auf den Schaft (61) einwirkt und zwischen einer ausgerasteten Stellung und einer eingerasteten Stellung und umgekehrt beweglich ist, wobei das Betätigungselement (70) während der Bewegung von der ausgerasteten Stellung in die eingerastete Stellung eine Kraft auf den Schaft (61) ausübt, die den Schaft (61) von der ersten Stellung in die zweite Stellung schiebt, sodass der Schaft (61) in der eingerasteten Stellung in der zweiten Stellung ist und der Schieber (62) in der geöffneten Stellung ist, dabei greift das Betätigungselement (70) in der ausgerasteten Stellung nicht in die Bewegungen des Schafts (61) und des Schiebers (62) zwischen den jeweiligen Stellungen ein.

4. Die Vorrichtung (1) nach dem Patentanspruch 3, wobei die Bewegung des Betätigungselements (70) zwischen der ausgerasteten Stellung und der eingerasteten Stellung und umgekehrt eine Drehung um eine Rotationsachse ist.

5. Die Vorrichtung (1) nach dem Patentanspruch 4, wobei der Bewegungsmechanismus (7) ein Verschiebungselement (74) beinhaltet, das dazu imstande ist, sich auf einer Verschiebungsachse zu verschieben, die parallel zur Bewegungslinie des ersten Bauteils (21) zwischen der Betriebsstellung und der Grundstellung ist, und einen Verbindungsarm (73) zwischen dem Verschiebungselement (74) und dem Betätigungselement (70), der Verbindungsarm (73) ist dabei drehbar am Verschiebungselement (74) und am Betätigungselement (70) gelagert, sodass eine Verschiebung des Verschiebungselements (74) in eine Drehung des Betätigungselements (70) umgewandelt wird.

6. Die Vorrichtung (1) nach dem Patentanspruch 3, wobei die Bewegung des Betätigungselements (70) zwischen der ausgerasteten Stellung und der eingerasteten Stellung und umgekehrt eine Verschiebung auf einer Verschiebungsachse ist, die parallel zur Bewegungslinie des ersten Bauteils (21) zwischen der Betriebsstellung und der Grundstellung ist.

7. Die Vorrichtung (1) nach dem Patentanspruch 6, wobei das Betätigungselement (70) am ersten Bauteil (21) befestigt ist und mit dem ersten Bauteil (21) beweglich ist.

8. Die Vorrichtung (1) nach jedem der Patentansprüche 3 bis 7, wobei die Bewegung des Schafts (61) zwischen der ersten Stellung und der zweiten Stellung und umgekehrt eine Verschiebungsbewegung auf einer Längsachse des Schafts (61) ist, wobei die Bewegung des Betätigungselements (70) zwischen der ausgerasteten Stellung und der eingerasteten Stellung und umgekehrt auf einer Ebene erfolgt, die transversal oder lotrecht zur Längsachse des Schafts (61) verläuft, wobei das Betätigungselement (70) einen keilförmigen Abschnitt (71) beinhaltet, der eine Schubfläche hat, die im Verhältnis zur Bewegungsebene des Betätigungselements (70) schräg ist, und der, während der Bewegung zwischen der ausgerasteten Stellung und der eingerasteten Stellung, mit einem jeweiligen Kontaktelement (64) des Schafts (61) zusammenwirkt, um den Schaft (61) in der Längsrichtung zur zweiten Stellung zu schieben.

9. Die Vorrichtung (1) nach dem Patentanspruch 8, wobei das Betätigungselement (70) einen Durchgangskanal (72) hat, in dem ein Abschnitt des Schafts (61) untergebracht ist.

10. Die Vorrichtung (1) nach jedem der Patentansprüche 1 bis 9, wobei der Dichtungssitz (622) an einem Ende eines Endabschnitts (52) des Ausgabekanals (5) ist, sodass, wenn der Schieber (62) in der geschlossenen Stellung ist, das Absperrventil (6) ein Ende des Ausgabekanals (5) schließt.

11. Die Vorrichtung (1) nach dem Patentanspruch 10, wobei der Spender (4) eine innere Kammer (40) beinhaltet und eine Ausgabeöffnung (45) in einem unteren Bereich der inneren Kammer (40) hat, der Endabschnitt (52) des Ausgabekanals (5) ist dabei in der inneren Kammer (40) und öffnet sich dabei nach oben in einem oberen Bereich der inneren Kammer (40).

12. Die Vorrichtung (1) nach jedem der Patentansprüche 1 bis 11, wobei die Aufgusskammer (23) beschaffen ist, um eine Kapsel (9) entgegenzunehmen, die die Lebensmittelsubstanz enthält, die Aufgusseinheit (2) mit dem ersten Bauteil (21) in der Grundstellung dabei das Einsetzen der Kapsel (9) in die Aufgusskammer (23) oder das Herausnehmen der Kapsel (9) aus der Aufgusskammer (23) erlaubt, die Aufgusseinheit (2) mit dem ersten Bauteil (21) in der Betriebsstellung dabei im Gebrauch die Kapsel (9) in der Aufgusskammer enthält, und die Getränkezubereitungsteile dabei beschaffen sind, um den flüssigen Stoff durch die Kapsel (9) hindurchzuführen.

## Revendications

1. Un appareil (1) pour la préparation d'une boisson par infusion d'une substance alimentaire, l'appareil (1) comprenant :
- un groupe d'infusion (2) qui définit une chambre d'infusion (23) destinée à recevoir la substance alimentaire, le groupe d'infusion (2) comprenant un premier organe (21) et un deuxième organe (22), le premier organe (21) étant mobile par rapport au deuxième organe (22) entre une position de repos, dans laquelle le premier organe (21) et le deuxième organe (22) sont espacés l'un de l'autre et la chambre d'infusion (23) est ouverte et permet l'introduction de la substance alimentaire dans la chambre d'infusion (23) ou le retrait de la substance alimentaire de la chambre d'infusion (23), et une position opérationnelle, dans laquelle le premier organe (21) et le deuxième organe (22) sont accouplés l'un avec l'autre et la chambre d'infusion (23) est fermée ;
- des éléments de préparation de la boisson, qui sont configurés pour alimenter, en utilisation, une substance liquide dans la chambre d'infusion (23), déterminant ainsi la préparation de la boisson suite à l'interaction entre la substance liquide et la substance alimentaire ;
- un distributeur (4) pour distribuer la boisson, un conduit de distribution (5) reliant la chambre d'infusion (23) au distributeur (4) ; et
- une soupape de contre-pression (6) qui est positionnée sur le conduit de distribution (5) et qui, en fonction d'une différence de pression entre un côté en amont et un côté en aval de la soupape de contre-pression (6), empêche ou permet un écoulement de boisson vers le distributeur (4),
la soupape de contre-pression (6) comprenant un siège d'étanchéité (622) qui entoure un passage pour la boisson, un obturateur (62) qui est mobile par rapport au siège d'étanchéité (622) entre une position fermée et une position ouverte, un organe élastique (63) qui pousse l'obturateur (62) vers la position fermée, où dans la position fermée l'obturateur (62) est en contact avec le siège d'étanchéité (622) fermant ainsi le passage pour la boisson et dans la position ouverte l'obturateur (62) est espacé du siège d'étanchéité (622) laissant ainsi le passage pour la boisson ouvert,
**caractérisé en ce que** le groupe d'infusion (2) coopère mécaniquement en conjonction avec la soupape de contre-pression (6) par l'intermédiaire d'un mécanisme de mouvement (7), de manière à ce que, pendant le mouvement du premier organe (21) de la position opérationnelle à la position de repos, le mécanisme de mouvement (7) déplace l'obturateur (62) de la position fermée à la position ouverte et à ce que, pendant le mouvement du premier organe (21) de la position de repos à la position opérationnelle, le mécanisme de mouvement (7) libère l'obturateur (62) et permette un retour de l'obturateur dans la position fermée.

2. L'appareil (1) selon la revendication 1, dans lequel la soupape de contre-pression (6) comprend une tige (61) qui est reliée à l'obturateur (62) et est mobile avec l'obturateur (62), la tige (61) étant mobile entre une première position, dans laquelle l'obturateur (62) est dans la position fermée, et une deuxième position, dans laquelle l'obturateur (62) est dans la position ouverte,
le mécanisme de mouvement (7) agissant sur la tige (61) pour déplacer la tige (61) de la première position à la deuxième position pendant le mouvement du premier organe (21) de la position opérationnelle à la position de repos.

3. L'appareil (1) selon la revendication 2, dans lequel le mécanisme de mouvement (7) comprend un organe d'actionnement (70) qui agit sur la tige (61) et est mobile entre une position désengagée et une position engagée, et inversement, dans lequel l'organe d'actionnement (70) pendant le mouvement de la position désengagée vers la position engagée applique une force sur la tige (61) qui déplace la tige (61) de la première position à la deuxième position, de sorte que dans la position engagée la tige (61) est dans la deuxième position et l'obturateur (62) est dans la position ouverte, l'organe d'actionnement (70) dans la position désengagée n'interférant pas avec les mouvements de la tige (61) et de l'obturateur (62) entre les positions respectives.

4. L'appareil (1) selon la revendication 3, dans lequel le mouvement de l'organe d'actionnement (70) entre la position désengagée et la position engagée, et inversement, est une rotation autour d'un axe de rotation.

5. L'appareil (1) selon la revendication 4, dans lequel le mécanisme de mouvement (7) comprend un élément de translation (74), qui est capable de translater le long d'un axe de translation qui est parallèle à la direction de mouvement du premier organe (21) entre la position opérationnelle et la position de repos, et un bras de liaison (73) entre l'élément de translation (74) et l'organe d'actionnement (70), le bras de liaison (73) étant pivotant au niveau de l'élément de translation (74) et au niveau de l'organe d'actionnement (70), de sorte qu'une translation de l'élément de translation (74) est convertie en une rotation de l'organe d'actionnement (70).

6. L'appareil (1) selon la revendication 3, dans lequel le mouvement de l'organe d'actionnement (70) entre la position désengagée et la position engagée, et inversement, est une translation le long d'un axe de translation qui est parallèle à la direction de mouvement du premier organe (21) entre la position opérationnelle et la position de repos.

7. L'appareil (1) selon la revendication 6, dans lequel l'organe d'actionnement (70) est fixé au premier organe (21) et est mobile avec le premier organe (21).

8. L'appareil (1) selon l'une quelconque des revendications de 3 à 7, dans lequel le mouvement de la tige (61) entre la première position et la deuxième position, et inversement, est un mouvement de translation le long d'un axe longitudinal de la tige (61), dans lequel le mouvement de l'organe d'actionnement (70) entre la position désengagée et la position engagée, et inversement, se fait sur un plan qui est transversal ou perpendiculaire à l'axe longitudinal de la tige (61), dans lequel l'organe d'actionnement (70) comprend une portion en forme de coin (71) qui a une surface de poussée inclinée par rapport au plan de mouvement de l'organe d'actionnement (70) et qui, pendant le mouvement entre la position désengagée et la position engagée, interagit avec un élément de contact (64) respectif de la tige (61) pour pousser la tige (61) longitudinalement vers la deuxième position.

9. L'appareil (1) selon la revendication 8, dans lequel l'organe d'actionnement (70) a un canal traversant (72) qui loge un tronçon de la tige (61).

10. L'appareil (1) selon l'une quelconque des revendications de 1 à 9, dans lequel le siège d'étanchéité (622) est à une extrémité d'un tronçon terminal (52) du conduit de distribution (5), de sorte que lorsque l'obturateur (62) est dans la position fermée la soupape de contre-pression (6) ferme une extrémité du conduit de distribution (5).

11. L'appareil (1) selon la revendication 10, dans lequel le distributeur (4) comprend une chambre intérieure (40) et a une ouverture de distribution (45) dans une région de fond de la chambre intérieure (40), le tronçon terminal (52) du conduit de distribution (5) étant dans la chambre intérieure (40) et s'ouvrant vers le haut dans une région de dessus de la chambre intérieure (40).

12. L'appareil (1) selon l'une quelconque des revendications de 1 à 11, dans lequel la chambre d'infusion (23) est configurée pour recevoir une capsule (9) qui contient la substance alimentaire, le groupe d'infusion (2) avec le premier organe (21) dans la position de repos permettant l'introduction de la capsule (9) dans la chambre d'infusion (23) ou le retrait de la capsule (9) de la chambre d'infusion (23), le groupe d'infusion (2) avec le premier organe (21) dans la position opérationnelle contenant, en utilisation, la capsule (9) dans la chambre d'infusion (23), et les éléments de préparation de la boisson étant configurés pour alimenter la substance liquide à travers la capsule (9).
